# EUROPÄISCHE PATENTSCHRIFT

(11) **EP 3 568 610 B1**
(45) Veröffentlichungstag und Bekanntmachung des Hinweises auf die Patenterteilung: **28.04.2021**
(21) Anmeldenummer: 18704407.8
(22) Anmeldetag: 16.01.2018
(51) Int. Cl.: F16G 13/16

(54) **TRENNSTEG FÜR ENERGIEFÜHRUNGSKETTEN**
SEPARATING LINK FOR ENERGY CHAINS
BANDE DE SÉPARATION POUR CHAÎNES DE GUIDAGE D'ÉNERGIE

(30) Priorität: 16.01.2017 DE 202017100200 U
(43) Veröffentlichungstag der Anmeldung: 20.11.2019
(73) Patentinhaber: Igus GmbH, 51147 Köln (DE)
(72) Erfinder: HERMEY, Andreas, 53773 Hennef (DE); STRACK, Stefan, 53639 Königswinter (DE); JAEKER, Thilo-Alexander, 53757 Sankt Augustin (DE)
(74) Vertreter: Lippert Stachow Patentanwälte Rechtsanwälte
(86) Internationale Anmeldenummer: PCT/EP2018/051008
(87) Internationale Veröffentlichungsnummer: WO 2018/130721

(56) Entgegenhaltungen:
- DE-A1- 19 547 215
- DE-A1- 19 810 960
- DE-A1-102006 014 598
- DE-U1- 9 102 121

## Beschreibung

Die Erfindung betrifft allgemein das Gebiet der Energieführungsketten zur geschützten, aktiven Führung von Leitungen wie Kabeln, Schläuchen und dergleichen. Energieführungsketten sind typisch aus schwenkbar verbundenen Kettengliedern aufgebaut, welche zwei Seitenlaschen aufweisen. Diese sind zumindest bei einigen der Kettenglieder durch zwei Querstege stabil miteinander verbunden und definieren einen inneren Aufnahmeraum bzw. Führungskanal für die Leitungen.

Die Erfindung betrifft speziell einen sog. Trennsteg zur Innenaufteilung einer Energieführungskette. Derartige Trennstege dienen, meistens zusammen mit sprossenartigen Querböden oder Fachböden, zur Bildung einer regalartigen Innenaufteilung im Aufnahmeraum der Kettenglieder. Hierdurch werden die eingelegten Leitungen in geordneter Weise von Kettenglied zu Kettenglied geführt und diese Ordnung bleibt beim Verfahren erhalten, was auch Verschleiß durch gegenseitige Reibung der geführten Leitungen zumindest verringert. Die Trennstege dienen dabei zur vertikalen Aufteilung und können ohne Querböden verwendet werden. Die Querböden (auch Fachböden genannt) dienen ggf. zur horizontalen Aufteilung.

Aus dem Stand der Technik sind bereits verschiedenste Bauweisen für Trennstege bekannt, beispielsweise aus dem europäischen Patent EP 0 343 192 B1, dem deutschen Patent

DE 43 13 242 C2 oder der Patentanmeldung US 2014/0096499 A1. Hierbei ist eine Vielzahl Einzelteile erforderlich und die Herstellung der gewünschten Innenaufteilung ist verhältnismäßig zeitaufwändig.

Eine Vereinfachung der Montage ist also wünschenswert. Als nächstliegender Stand der Technik wird insoweit hier ein Trennsteg gemäß Gebrauchsmuster DE 91 02 121 U1 betrachtet für eine Energieführungskette, die aus schwenkbar verbundenen Kettengliedern besteht, welche in herkömmlicher Bauweise zwei Seitenlaschen aufweisen, die zumindest bei einigen Kettengliedern durch zwei Querstege miteinander verbunden sind und einen Führungskanal für Leitungen definieren. DE 91 02 121 U1 offenbart einen Trennsteg der in seinem mittleren Teil mehrere längliche als Durchgangsloch gestaltete Aussparungen hat zum Aufnehmen jeweils eines plattenartigen Querbodens. Jede Aussparung mündet über eine eigene Einführöffnung zu einer Schmalseite des Trennstegs seitlich nach außen, sodass ein Querboden durch die Einführöffnung in die Aussparung von Hand einführbar ist, was die Montage vereinfacht. Die Bauweise gemäß DE 91 02 121 U1 vereinfacht so insbesondere das wahlweise Anbringen von Querböden bzw. Fachböden an den Trennstegen.

Als nachteilig hierbei wurde angesehen, dass die Sprossen bzw. Querböden u. U. nicht hinreichend befestigt sind, d.h. gegen Abtrennen bzw. Lösen vom Trennsteg gesichert sind. Lose Querböden könnten den Betrieb erheblich beeinträchtigen und im schlimmsten Fall zur Beschädigung der Energieführungskette führen. Eine Weiterentwicklung stellt die Lehre aus der Offenlegungsschrift DE 198 10 960 A1 dar, welche auch eine einfache und schnelle Bestückung der Trennstege mit Querböden ermöglicht. Hier hat jeder Trennsteg eine zusätzliche Abdeckung für die zu einer Schmalseite hin offenen Ausnehmungen bzw. Aussparungen, welche die Querböden sichert. Die Abdeckung erhöht jedoch die Anzahl der Bauteile und den Zeitaufwand bei der Montage.

Ein ähnliches Prinzip ist in DE 195 47 215 A1 beschrieben. Die Ausnehmungen sind im zusammengebauten Zustand des Trennstegs seitlich verschlossen und zwischen zwei Teilen des Trennstegs, die durch einen Scharnier miteinander schwenkbar verbunden sind, ausgebildet.

DE 10 2006 014 598 A1 beschreibt ebenfalls einen zweiteiligen Trennsteg, zwischen dessen zwei Teilen die Querböden eingeklemmt werden können, sodass die Ausnehmungen im zusammengebauten Zustand des Trennstegs seitlich verschlossen sind.

Eine Aufgabe der vorliegenden Erfindung ist es mithin, einen Trennsteg vorzuschlagen, der eine einfache und schnelle Montage der Querböden ermöglicht und dennoch eine stabilere Verbindung zwischen Quersteg und Querboden gewährleistet.

Dies wird bei einem gattungsgemäßen Trennsteg nach dem Oberbegriff aus Anspruch 1 bereits erreicht, indem der Trennsteg zu jeder Aussparung zugehörig bzw. zugeordnet einen jeweiligen besonderen bzw. ausgeprägten Biegebereich aufweist, wobei die Biegung des Biegebereichs es erlaubt, das Spaltmaß der Einführöffnung zur zugehörigen bzw. zugeordneten Aussparung selektiv zu verändern. Ferner ist erfindungsgemäß vorgesehen, dass das Spaltmaß jeder Einführöffnung in bestimmungsgemäßer Einbaulage auf ein geringes Maß reduzierbar ist, vorzugsweise im Wesentlichen auf ein verschwindend geringes Maß minimiert ist bzw. minimiert werden kann. Dabei soll insbesondere ein im Vergleich zur lichten Weite der Aussparung deutlich geringere Abmessung des Spaltmaß erzielt werden. Ein minimales Spaltmaß kann so jedenfalls im bestimmungsgemäß eingebauten Zustand des Trennstegs gewährleistet sein, d.h. wenn dieser korrekt in ein fertiggestelltes, geschlossenes Kettenglied eingebaut ist. Unter Spaltmaß der Einführöffnung wird vorliegend die freie bzw. offene Abmessung der Einführöffnung in der Höhe bzw. Hauptebene des Trennstegs gemessen verstanden, z.B. die freie Öffnungsweite, durch welche der Querboden eingeführt werden kann, wenn das Spaltmaß auf ein ausreichendes Maß geweitet ist oder z.B. ein demgegenüber minimiertes deutlich kleineres Spaltmaß, durch welches der Querboden nicht ohne erhebliche Kraft entfernt werden kann.

Durch das Reduzieren des Spaltmaßes der Einführöffnung wird im Vergleich zur Lehre aus DE 91 02 121 U1 auf überraschend einfache Weise eine stabilere, zuverlässigere Befestigung der Querböden am Trennsteg erzielt. Die Querböden können sich nicht unbeabsichtigt, z.B. durch Reibung mit einer Leitung, durch die Einführöffnung vom Quersteg ablösen. Dementsprechend wird jede Einführöffnung in geschlossener Einbaulage zumindest in einem zur besseren Halterung der Querböden ausreichenden Maße oder vorzugsweise im Wesentlichen vollständig geschlossen werden. Dank vorbestimmter ausgeprägter Biegebereiche im Quersteg ist im Vergleich zur Lehre aus DE 198 10 960 A1 kein zusätzliches Anbauteil zur Sicherung erforderlich.

Bestimmungsgemäß elastisch biegsame Biegebereiche können dabei, bei vorgebener Kraft zum Aufspreizen bzw. Einklemmen, die in der Hauptebene am stärksten bzw. leichtesten verformbaren Bereiche im Rumpfkörper des Trennstegs sein. Somit kann insbesondere wenn der Trennsteg im Kettenglied zwischen zwei geschlossenen Querstegen bzw. Öffnungsstegen eingebaut ist im Vergleich zur lichten Weite der Aussparung, wenn der Trennsteg unbelastet ist, eine deutlich geringere Abmessung des Spaltmaß erzielt werden.

In einer besonders bevorzugten Ausführungsform ist vorgesehen, dass der Trennsteg in belastungsfreien bzw. losem Zustand quasi vorgespannt bzw. leicht aufgespreizt ausgeführt ist, so dass die Einführöffnungen zumindest leicht auf- bzw. ausgeweitet sind, wenn der Trennsteg frei von äußeren Kräften ist (loser Zustand). Dies wird vorzugsweise erzielt, indem der Trennsteg in losem Zustand entlang seiner Längsrichtung im Vergleich zur Einbaulage bogenartig vorgekrümmt gestaltet ist, z.B. dementsprechend mit leicht aufgespreizter Grundform im Spritzgussverfahren hergestellt ist. Dabei haben die aufgeweiteten Einführöffnungen gegenüber der Einbaulage ein größeres Spaltmaß, welches ein relativ einfaches Einführen eines Querbodens bzw. Fachbodens von Hand erlaubt, d.h. mit geringfügigem oder ohne weiteres Aufbiegen des Trennstegs. Dementsprechend wird das Spaltmaß der Einführöffnungen, insbesondere aller Einführöffnungen, spürbar reduziert, wenn der Trennsteg aus seiner Ruhelage, insbesondere gegen seine Vorkrümmung, in das Kettenglied eingespannt bzw. in Längsrichtung gestaucht wird. Das Einspannen erfolgt dabei z.B. indem ein als lösbarer Quersteg ausgeführter Quersteg oder ein als klappbarer Öffnungssteg ausgeführter Quersteg am Kettenglied geschlossen bzw. befestigt wird. In dieser Ausführungsform weiten also die Einführöffnungen selbsttätig auf, wenn das Kettenglied geöffnet wird indem man einen der beiden gegenüberliegenden Querstegen entfernt. Dabei "springt" der Trennsteg quasi ähnlich wie eine Feder "auf" bzw. "zurück" in seinen aufgespreizten losen Zustand. Dies macht die Aufnahmen bei geöffnetem Quersteg leichter zugänglich und vereinfacht und beschleunigt somit die Montage der Querböden. Anstelle typischer geraden Bauweisen können derart "vorgespannte" Trennstege ohne Weiteres durch entsprechende vorgekrümmte Formgebung als Spritzguss-Kunststoffbauteile hergestellt werden.

Querstege und Öffnungsstege sind für die vorliegende Erfindung funktional gleichwertig, der Begriff daher Quersteg wird für beide hier gleichbedeutend verwendet.

Insbesondere in der vorgenannten Ausführungsform kann der Biegebereich jeder Aussparung im Wesentlichen der Einführöffnung gegenüberliegend, etwa an der anderen Schmalseite, vorgesehen sein.

Vorzugsweise sind mehrere Aussparungen zum Aufnehmen jeweils eines plattenartigen Querbodens vogesehen und jede Aussparung hat eine eigene Einführöffnung durch welche ein Querboden montiert werden kann.

In einer besonders zur Herstellung als Spritzguss-Kunststoffbauteil geeigneten Ausführungsform ist jeder Biegebereich des Trennstegs als eine durch Materialaussparung gebildete Verjüngung quer zur Längsrichtung ausgeführt, insbesondere an der anderen Schmalseite des Trennstegs, d.h. der Schmalseite, welche von den Einführöffnungen abgewandt liegt.

In einer bevorzugten Ausführungsform hat jede Einführöffnung zwei gegenüberliegende Begrenzungsflächen, die eine ineinandergreifende Formgebung z.B. zwei konjugierte bzw. komplementäre Oberflächen aufweisen. Hierdurch kann im geschlossenen Zustand eine verbesserte Sicherung der Querböden und zugleich eine bessere Torsionssteifigkeit des Trennstegs gegen Verdrehen um seine Längs- bzw. Hauptachse erzielt werden. Vorzugsweise hat dabei jede Begrenzungsfläche mindestens eine Vertiefung und/oder einen Vorsprung, welche mit konjugiertem Vorsprung oder und/oder Vertiefung der gegenüberliegenden Begrenzungsfläche zusammenwirken. In einer Weiterbildung kann jede Begrenzungsfläche jeweils zwei versetzt angeordnete Eingriffsbereiche entlang der Hauptseiten des Trennstegs aufweisen, wobei jeder dieser Eingriffsbereiche jeweils mindestens eine Vertiefung und/oder einen Vorsprung umfasst, insbesondere eine Vertiefung und einen Vorsprung. Durch eine komplementäre Gestaltung der gegenüberliegenden Eingriffsbereiche kann so ein besonders torsionsfester Eingriff erzielt werden. Auch andere ineinandergreifende Formen der Begrenzungsflächen z.B. Zahnreihen oder noppenartige Formschlüsse liegen im Rahmen der Erfindung.

In einer weiteren Ausführungsform können die Biegebereiche als elastisch biegsame Teilabschnitte einer durchgehenden Strebe an der anderen Schmalseite, d.h. an der den Einführöffnungen gegenüberliegenden Schmalseite, des Trennstegs angeordnet sein und durch eine sich zur Strebe hin aufweitende, insbesondere stetig aufweitende, Materialaussparung mit der gewünschten elastische Biegsamkeit versehen sein.

Grundsätzlich ist der Trennsteg vorzugsweise durchgehend aus demselben Kunststoff hergestellt. Biegebereiche können aber auch durch einen zweiten biegeelastischeren Kunststoff im Mehrkomponentenverfahren erzeugt werden.

Eine alternative oder ergänzende Möglichkeit zur gezielten Reduzierung des Spaltmaßes besteht darin, dass der Trennsteg an der jeweiligen Einführöffnung jeder Aussparung eine biegsame Rastnase aufweist, die ähnlich wie ein Widerhaken wirkt. Eine solche Rastnase kann beim Einführen eines Querbodens die Einführöffnung ausreichend freigeben und anschließend zurückspringen um den eingeführten Querboden zuverlässig zu halten bzw. zu sichern. Hierzu ist eine Hinterschneidung bzw. Ausnehmung vorgesehen, in welche die Rastnase beim Einführen des Querbodens durch elastisch Verformung ausweicht. Die Verwendung solcher Rastnasen erleichtert den Einbau von Querböden, erfordert für deren Entfernen aber Sonderwerkzeug.

Bei einer Ausführungsform mit ausgeprägten Rastnasen ist bevorzugt vorgesehen, dass jede Rastnase über den der Ausnehmung zugehörigen Biegebereich biegsam mit dem restlichen Körper verbunden ist. Die Rastnase kann dabei insbesondere einteilig mit dem Trennsteg hergestellt sein, z.B. im Spritzgussverfahren, und weist vorzugsweise zu der einen Schmalseite, von welcher aus die Querböden eingeführt werden, eine Einführschräge auf. Prinzipiell ist auch eine Ausführschräge denkbar um die Demontage ohne Sonderwerkzeug zu erlauben, darf jedoch die sichere Befestigung nicht vereiteln, d.h. für deutlich höhere Kraft ausgelegt sein.

Unabhängig davon, ob das Spaltmaß durch eine biegsame Rastnase, durch Vor- bzw. Einspannen des Trennstegs oder durch eine geeignete Kombination dieser beiden Maßnahmen minimiert wird, ist es vorteilhaft, wenn die Einführöffnung im Vergleich zur Haupt-Mittelachse der länglichen Aussparung, welche typischerweise einen langlochförmigen oder ovalen Querschnitt dem Querboden entsprechend aufweist, höhenversetzt, d.h. in Längsrichtung des Trennstegs versetzt, angeordnet ist. Dies erlaubt ein zusätzliches Einrasten des Querbodens in der Längsrichtung des Trennstegs. Dies bringt zusätzliche Sicherungswirkung gegen unerwünschtes Lösen.

Insbesondere in Verbindung mit der letztgenannten Gestaltung ist es vorteilhaft, wenn die Aussparung innen einen konkaven, im Wesentlichen ovalen Querschnitt (in der Hauptebene des Trennstegs), aufweist. In Verbindung mit dem Höhenversatz bildet die Begrenzung der Aussparung dadurch eine Art zusätzlicher Rasthaken unterhalb bzw. oberhalb der Einführöffnung. Zweckmäßig ist die Aussparung weitestgehend zum Querschnitt der Querböden korrespondiert gestaltet bzw. ein entsprechender etwa ovaler oder länglichrunder Querschnitt der Querböden vorgesehen.

Die erfindungsgemäße Lösung ermöglicht es ohne weiteres, das Spaltmaß der Einführöffnung in Schließstellung auf weniger als 50% der lichten Weite der Aussparung zu verringern. Als lichte Weite der Aussparung wird dabei die maximale Abmessung der Aussparung in Höhen- bzw. Längsrichtung des Trennstegs entsprechend der maximal aufzunehmenden Dicke des Querbodens verstanden und entspricht also der Maximalwandstärke des passenden Querbodens bzw. Fachbodens. Bevorzugt beträgt das reduzierte Spaltmaß der Einführöffnung im eingebauten Zustand bzw. in Schließstellung (vor oder nach Einführen des Querbodens) weniger als ein Drittel der lichten Weite der Aussparung, was besonders gute Sicherung bewirkt.

In besonders zweckmäßiger Ausführungsform hat der Trennsteg einen plattenartig ausgeführten mittleren Teil, der einteilig in einen oberen und unteren Teil übergeht, die jeweils zur Befestigung an einem von beiden Querstegen des Kettenglieds gestaltet sind. Besonders vorteilhaft ist es, am unteren Teil einen Haltefuß zur mechanischen Befestigung, form- und/oder kraftschlüssig, am entsprechenden Quersteg vorzusehen. Am oberen Teil kann hingegen eine Halterung bzw. ein Haltekopf vorgesehen sein, welcher lediglich in Richtung des Längsverlaufs der Energieführungskette am gegenüberliegenden Quersteg hält und diesen lose umgreift. Dies erlaubt es, den lose umgriffenen Quersteg als Öffnungssteg auszuführen, wobei dessen Öffnung durch den Trennsteg nicht beeinträchtigt wird. Bei gespreizt bzw. vorgekrümmt ausgeführtem Trennsteg drückt der Öffnungssteg auf den Haltekopf und spannt dabei den Trennsteg gegen seine Vorkrümmung, vorzugsweise in eine im Wesentlichen senkrechte gerade Stellung. Durch die Befestigung am unteren Teil bleibt auch ein "aufspringender" vorgespannter Trennsteg sicher am geöffneten Kettenglied gehalten, auch wenn die eigentliche Befestigung ausschließlich durch den Haltefuß erzielt wird. Eine geeignete Gestaltung des Haltefusses zeigt DE202015101707U1.

Zur Sicherung der Querböden bzw. Fachböden in Querrichtung, d.h. seitlich in einer Ebene senkrecht zur Verlaufsrichtung der Energieführungskette, ist es vorteilhaft, wenn jede Aussparung im Trennsteg eine zugeordnete Haltefeder mit einem Rastnocken aufweist, die als einrastende Sicherung mit einer entsprechenden Öffnung, vorzugsweise an der Unter- oder Oberseite des Querbodens, zusammenwirkt.

Die Haltefeder kann einseitig oder beidseitig mit dem Rumpf des Trennstegs verbunden sein, und insbesondere einteilig mit diesem hergestellt sein. Eine einseitig angeformte Ausführung erhöht die Flexibilität der Haltefeder. Vorzugsweise hat die Haltefeder dabei ein der Einführöffnung zugewandtes freies Ende.

Für eine möglichst variable Innenaufteilung der Energieführungskette ist es vorteilhaft, wenn der Trennsteg in seinem mittleren Teil mindestens drei oder mehr Aussparungen aufweist.

Besonders vorteilhaft ist die erfindungsgemäße Lösung, wenn alle Einführöffnungen zu ein und derselben Schmalseite des Trennstegs hin münden. Eine systematische Anordnung aller Einführöffnungen stets in dieselbe Richtung, vereinfacht zusätzlich die Montage und nachträgliche Veränderungen der Innenaufteilung.

Die Erfindung betrifft ferner ein Kettenglied für eine Energieführungskette mit mindestens zwei senkrecht zwischen beiden Querstegen eingespannten Trennstegen gemäß einer Ausführungsform wie oben beschrieben und mit mindestens einem von den Trennstegen gehaltenen horizontalen Querboden. Die Erfindung betrifft ferner eine Energiekette mit einer Vielzahl solcher Kettenglieder.

Schließlich betrifft die Erfindung auch die Verwendung der erfindungsgemäßen Trennstege zum Erstausrüsten, Nachrüsten oder Verändern der Innenaufteilung in einer Energieführungskette.

Weitere Einzelheiten, Merkmale und Vorteile der Erfindung sind der nachfolgenden, ausführlicheren Beschreibung bevorzugter Ausführungsbeispiele anhand der beiliegenden Figuren zu entnehmen. Diese zeigen rein beispielhaft und maßstabsgetreue:
FIG.1: einen Querschnitt eines Kettenglieds einer mit Leitungen und einer Innenaufteilung bestückten Energieführungskette;
FIG.2A-2D: ein erstes Ausführungsbeispiel eines Trennstegs, in Seitenansicht (FIG.2A) des eingebauten Zustands, perspektivischer Ansicht (FIG.2B) des eingebauten Zustands, in Seitenansicht (FIG.2C) des losen Zustands, und in perspektivischer Ansicht (FIG.2D) des Zustands, wobei FIG.2C-2D den Einbau von Querböden veranschaulichen;
FIG.3A-3B: ein zweites Ausführungsbeispiel eines Trennstegs, in Seitenansicht (FIG.3A) und perspektivischer Ansicht (FIG.3B) jeweils des losen Zustands des Trennstegs;
FIG.4A-4B: ein drittes Ausführungsbeispiel eines Trennstegs, in Seitenansicht (FIG.4A) und perspektivischer Ansicht (FIG.4B) jeweils des lsen Zustands des Trennstegs; und
FIG.5A-5D: ein viertes Ausführungsbeispiel eines Trennstegs, in beiden Seitenansichten (FIG.5C-5D) und in Vergrößerungen der Einführöffnungen von beiden Seiten (FIG.5A-5B).

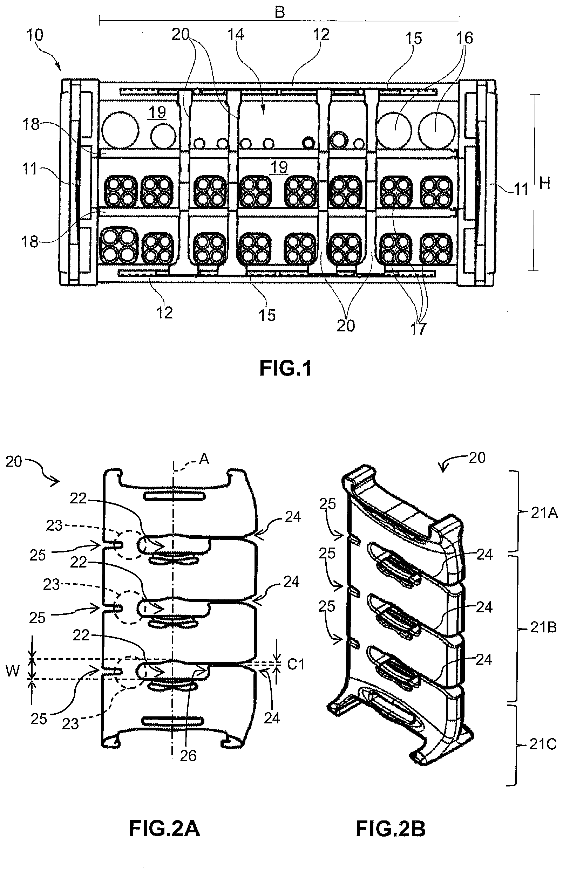

FIG.1 veranschaulicht im Querschnitt senkrecht zur Verlaufrichtung einer Energieführungskette 10 durch ein Kettenglied den Innenaufbau der Energieführungskette 10 zum aktiven Führen von Leitungen, wie z.B. Kabeln 17 und Schläuchen 16. Die Energieführungskette 10 ist aus einer Vielzahl miteinander schwenkbar verbundener Kettenglieder in Richtung senkrecht zur Ebene der FIG.1 zusammengesetzt. Die Kettenglieder bestehen hier ebenfalls aus Einzelteilen und haben zumindest zwei äußere Seitenteile, Seitenlaschen 11 genannt. Bei jedem oder z.B. jedem zweiten Kettenglied sind die Seitenlaschen 11 durch zwei parallele, identische Querstege 12 zu einem stabilen Gerüst fest verbunden und auf Abstand und parallel gehalten. Die Querstege 12 werden dazu an Hörnern (nicht gezeigt) der Seitenlaschen 11 lösbar befestigt. Die Seitenlaschen 11 und Querstege 12 begrenzen einen Aufnahmeraum 14 für die Leitungen 16, 17. Der Aufbau einer Energieführungskette 10 ist bekannt und kann beliebig sein, z.B. mit gekröpften Laschen oder alternierenden Innen- und Außenlaschen als Seitenlaschen 11. Insbesondere kommen auch zweiteilige Kettenglieder in Betracht, bei welchen die zwei Seitenlaschen 11 und ein Quersteg 12 aus einem Stück d.h. einteilig hergestellt sind und nur der andere Quersteg 12 lösbar ist (nicht gezeigt). Zur Innenaufteilung ist es bekannt, wie in FIG.1 gezeigt, horizontale Querböden 18 zur Aufteilung der Höhe H des Aufnahmeraums 14 und vertikale Trennstege 20 zur Aufteilung der Breite B des Aufnahmeraums 14 vorzusehen. Die Trennstege 20 können hierbei zumindest an einem Endbereich in Rastausnehmungen 15 entlang der Schmalseiten der Querstege 12 an wählbarer Position in Richtung der Breite B eingerastet sein und sind jedenfalls in Verlaufrichtung der Energieführungskette 10 gesichert. Die Querböden 18 sind in einer von mehreren Aussparungen, die gemäß einem vorgegebenen Raster an den Trennstege 20 als horizontal durchgehende Durchgangslöcher vorgesehen sind, in wählbaren Stufen der Höhe H anzubringen. FIG.1 zeigt hierbei über die Breite B fast vollständig durchgehende Einsteckböden als Querböden 18, auch kürzere Fachböden die nur einen Teil der Breite B aufteilen sind möglich. Die Trennstege 20 verlaufen mit ihrer Hauptebene bzw. Längsrichtung parallel zu den Seitenlaschen 11 und die Querböden 18 parallel zu den Querstegen 12. Jedes Kettenglied das Querstege 12 hat, wird dementsprechend mit einer gleichartigen Innenaufteilung des Aufnahmeraums 14 zugunsten der Leitungen 16, 17 vorgenommen werden. Trennstege 20 und Querböden 18 sollen also in regelmäßigem Abstand und identischer Anordnung an jedem n-ten Kettenglied vorgesehen sein, um den Aufnahmeraum 14 zur geordneten und besser geschützten Führung der Leitungen 16, 17 in gleichbleibende Kompartimente oder Fächer 19 aufzuteilen.

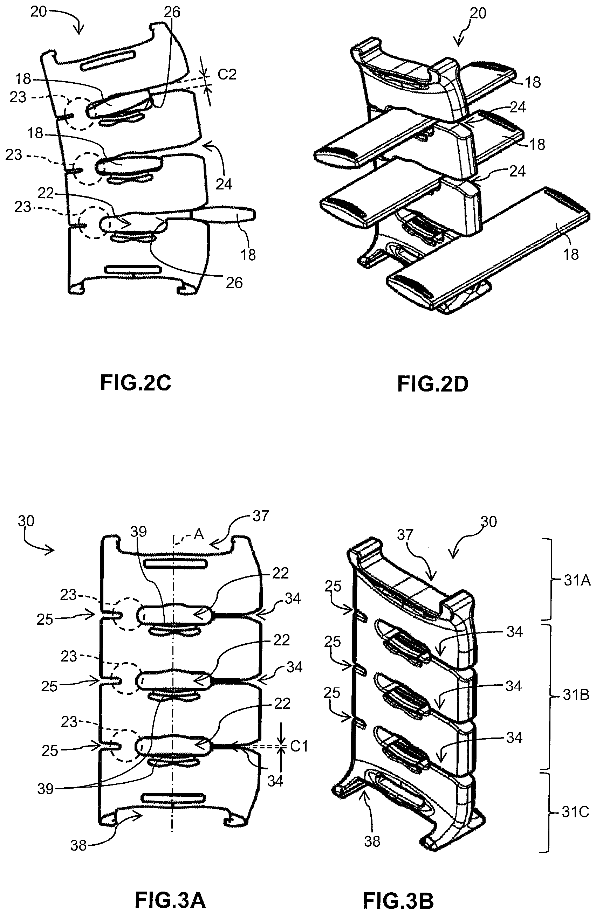

FIG.2A-2D zeigen einen Trennsteg 20 einer ersten Ausführungsform. Der Trennsteg 20 hat entlang seiner Längsrichtung A einen oberen Teil 21A, einen plattenartigen mittleren Teil 21B und einen unteren Teil 21C. Im mittleren Teil 21B sind hier mehrere z.B. drei identische Aussparungen 22 vorgesehen. In jede Aussparung 22 kann wahlweise je nach gewünschter Innenaufteilung (vgl. FIG.1) ein plattenartiger Fach- oder Querboden 18 über eine Einführöffnung 24 eingeführt werden. Jede Aussparung 22 durchbricht als Durchgangsloch den mittleren Teil 21B und hat einen länglich ovalen Querschnitt mit Hauptachse quer zur Längsrichtung A passend zu den Querböden 18. Zum Anbringen eines Querbodens 18 verfügt jede Aussparung 22 über eine jeweils eigene Einführöffnung 24, die an einer Schmalseite des Trennstegs 20 seitlich nach Außen mündet. So ist jede Aussparung 22 von dieser Schmalseite her zugänglich, d.h. man kann den Querboden 18 durch die Einführöffnung 24 in die Aussparung 22 einführen.

FIG.2A-2B zeigen den bestimmungsgemäßen Einbauzustand des Trennstegs 20 wie in FIG.1, bei welchem das Spaltmaß C1 der Einführöffnung 24 auf ein vernachlässigbar geringes Maß z.B. im Wesentlichen auf null minimiert ist, indem die begrenzenden Flächen ober- und unterhalb der Einführöffnung 24 dicht aneinander liegen oder im Anschlag stehen. Das Spaltmaß C1 der Einführöffnung 24 ist also im Vergleich zur lichten Weite W der Aussparung 24 erheblich geringer, jedenfalls gilt C1 << W/3, sodass ein Querboden 18 auch bei unüblicher Krafteinwirkung von außen, z.B. durch Reibung der Leitungen 16, 17, nicht von selbst durch die Einführöffnung 24 aus der Aussparung 24 lösen kann. Dies wird ermöglicht indem der Trennsteg 20 zu jeder Aussparung 22 zugehörig im mittleren Bereich 21B einen jeweiligen Biegebereich 23 aufweist. Bei Aufbiegen des Biegebereichs 23 wird das Spaltmaß C1 der Einführöffnung 24 der zugehörigen Aussparung 22 vergrößert. Der Biegebereich 23 jeder Aussparung 22 ist dabei an der anderen Schmalseite welche den Einführöffnungen 24 an der einen Seite abgewandt ist, im Bereich der Hauptachse der Aussparung 22 vorgesehen. Für eine ausreichende Biegsamkeit bei relativ steifem Kunststoff aus dem der Trennsteg 20 einteilig im Spritzguss hergestellt ist, kann jeder Biegebereich 23 in Form einer Verjüngung bzw. Materialschwächung gebildet sein, insbesondere durch eine Kerbe 25 bzw. Materialaussparung, die quer zur Längsrichtung A in der Schmalseite, etwa fluchtend mit der Hauptachse der Aussparung 22, vorgesehen ist.

FIG.2C-2D zeigen den Trennsteg 20 nicht eingebaut, d.h. unbelastet. Der lose Trennsteg 20 ist gemäß FIG.2C-2D mit aufgeweiteten Einführöffnungen 24 ausgeführt, d.h. mit gegenüber dem eingebauten Zustand in FIG.2A-2B bzw. FIG.1 deutlich größerem Spaltmaß C2. Durch die geöffneten, aufgeweiteten Einführöffnungen 24 können die Querböden 18 leicht von Hand eingeführt werden. Beim Schließen des Kettenglieds in den Zustand nach FIG.1 wird das Spaltmaß jeder Einführöffnung 24 durch Einspannen des Trennstegs 20 zwischen die beiden gegenüberliegenden Querstege 12 minimiert, wie in FIG.2A-2B gezeigt. Zum Zweck der Aufweitung im gelösten Zustand des Trennstegs 20 kann dieser mit einer Vorkrümmung, d.h. entlang der Längsrichtung A bogenartig vorgekrümmten Grundform als Spritzgussteil hergestellt sein d.h. quasi zur Aufweitung vorgespannt. Ein Drehen der Querböden 18 um ihre Längsachse weitet die Einführöffnungen 24. Die Querböden 18 können so entnommen werden, wenn mindestens ein Quersteg 12 entfernt ist. Geschlossene Querstege 12 dienen als Sicherung gegen Aufbiegen bzw. -spreizen.

Zwecks zusätzlicher Verrastung ist in FIG.2A-2D jede spaltartige Einführöffnung 24 in Längsrichtung A bzw. in Richtung der Höhe H gegenüber der Hauptachse der Aussparung 22 nach oben versetzt, sodass die Querböden 18 quer zur Verschiebung in Einführrichtung einrasten. Dabei bildet die konvexe Umrandung der Aussparung 22 unterhalb der Einführöffnung 24 eine Art Rasthaken 26, wie am besten aus FIG.2A/2C ersichtlich.

Wenn ein Quersteg 12, insbesondere der Quersteg 12 am oberen Teil 21A, entfernt ist spreizt der Trennsteg 20 sich auf in seine unbelastete Ruhelage nach FIG.2C-2D, in welcher die Querböden 18 oder Fachböden leicht von Hand eingeführt werden können.

Das Ausführungsbeispiel nach FIG.3A-3B ist in vielen Merkmalen identisch mit dem nach FIG.2A-2D. So hat z.B. auch der Trennsteg 30 abgerundete Kanten an den Schmalseiten des mittleren Teils 31B sowie am oberen und unteren Teil 31A, 31B. Am oberen Teil 31A hat er ebenfalls einen Haltekopf 37 der nur geringfügig oder leicht lösbar mit dem Quersteg 12 verrastet, aber zur Längssicherung die Schmalseiten des Querstegs umgreift. Der untere Teil 31B hat, wie in FIG.2A-2D, auch in FIG.3A-3B einen clipbaren bzw. verrastbaren Haltefuß 38 mit ausgeprägten Rastnocken an gegenüberliegenden Klauen des Haltefuß 38. Diese breiteren Klauen des Haltefuß 38 können fest in die verzahnte Rastausnehmung 15 eines Querstegs 12 einrasten und damit als Positionierraster zusammenwirken. Die Trennstege 30 sind vorzugsweise so angeordnet, dass ihr leichter lösbarer Haltekopf 37 stets radial außen in Bezug auf den Umlenkbogen der Energieführungskette 10 (FIG.1) liegt.

Wie in FIG.2A-2D hat in FIG.3A-3B jede Aussparung 32 eine einteilig in Art einer Blattfeder ausgeführte Haltefeder 39 mit einem Rastnocken, der in eine entsprechende Öffnung des Querbodens 18 (nicht gezeigt) einrastet. Dies sichert den Querboden 18 gegen Querverschiebung d.h. senkrecht zur Ebene der FIG.2A/3A. Die Sicherung der Haltefeder 39 ist vor allem bei kürzeren Fachböden (nicht gezeigt) vorteilhaft, deren Länge nur einem geringen Anteil der Breite B des Kettenglieds (FIG.1) entspricht und die nicht seitlich vom Trennsteg 20 bzw. 30 vorstehen sollen.

Der wesentliche Unterschied des Trennstegs 30 nach FIG.3A-3B zu FIG.2A-2D besteht darin, dass der Trennsteg 30 auch in seinem losen, unbelasteten Zustand minimierte Einführöffnungen 34 aufweist, d.h. keine Vorspannung in Längsrichtung A hat. Demnach muss für den Einbau der Querböden 18 mehr Kraft beim Einschieben aufgebracht werden. Zum leichteren Aufspreizen des Spaltmaß hat jede Einführöffnungen 34 an ihrer Mündung zur der Schmalseite aufweitende Einführschrägen. Die als Einführspalt ausgeführte Einführöffnung 34 wird aufgrund der gegenüberliegenden Biegebereiche 23 nur geweitet wenn ein Querboden 18 eingeschoben wird oder zum Entfernen gedreht wird. In FIG.3A-3B liegen die Einführöffnungen 34 bevorzugt mittig in Bezug auf die Höhe der entsprechenden Aussparung 22, d.h. nicht höhenversetzt. Geschlossene Querstege 12 dienen als Sicherung.

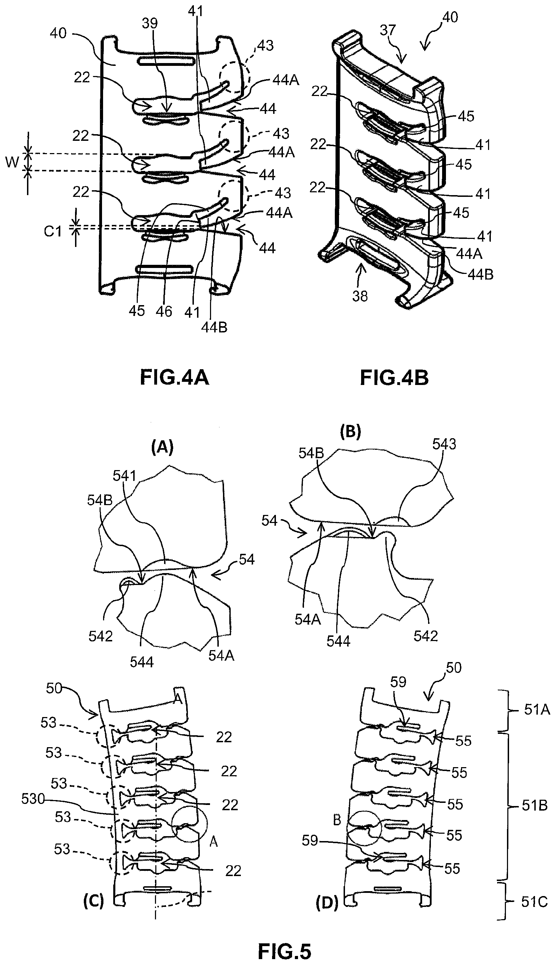

FIG.4A-4B zeigt ein alternatives Ausführungsbeispiel. Der Trennsteg 40 unterscheidet sich in der Bauweise vor allem darin, wie mittels Biegung das Spaltmaß der Einführöffnung 44 jeder Aussparung 22 auf ein im Vergleich zur lichten Weite der Aussparung bzw. Maximaldicke des Querbodens 18 geringfügiges Maß reduziert wird. Der Trennsteg 40 nach FIG.4A-4B hat an jeder Einführöffnung 44 d.h. zu jeder Aussparung 22 eine biegsame Zunge zum Einrasten, d.h. eine Rastnase 41, welche beim Einführen eines Querbodens 18 die Einführöffnung 44 freigibt und, ähnlich wie ein Widerhaken, den eingeführten Querboden 18 hält bzw. sichert. Jede Rastnase 41 ist über einen zugehörigen Biegebereich 43 biegsam und einteilig mit dem Trennsteg 40 hergestellt. In FIG.4A-4B sind die Biegebereiche 43 oberhalb der Aussparungen 22 vorgesehen, sodass die Rastnasen 41 von außen schräg nach unten zur Aussparung 22 verlaufen. Eine Hinterschneidung bzw. Ausnehmung 45, die zwischen Biegebereich 43 und Aussparung 22 verläuft erlaubt ein Ausweichen der keilförmigen Rastnase 41. Das freie Ende 46 der Rastnase 41 ist im Querschnitt passend zum Querschnitt der Querböden 18 bzw. Fachböden konkav eingeschnitten. Zum leichteren Einschieben eines Querbodens 18 hat jede Rastnase 41 als Begrenzung der Einführöffnung 44 vorzugsweise eine nach außen zur Schmalseite hin aufweitende Einführschräge 44A. Eine weitere Einführschräge 44B des Trennstegs 40 liegt der Einführschräge 44A gegenüber.

Das Ausführungsbeispiel nach FIG.4A-4B erlaubt trotz erleichtertem Einbau eine Minimierung des Spaltmaß C1 der Einführöffnung 44 auf ein im Vergleich zur lichten Weite der Aussparung 22 sehr geringfügiges Maß, ohne Materialschwächung durch Einkerbung am der abgewandten Schmalseite. Zum späteren Entnehmen eines montierten Querbodens 18 ist jedoch ein Werkzeug erforderlich um die Rastnase 41 zu entriegeln bzw. die Einführöffnung 44 zugänglich zu machen.

Merkmale der Ausführungsbeispiele können untereinander kombiniert werden, z.B. zur Vermeidung von Sonderwerkzeug, eine weniger stark schließende Rastnase 41 nach FIG.4A-4B mit einer z.T. vorgespannten Bauweise nach FIG.2A-2D. Teile ähnlicher bzw. identischer Bau- oder Wirkweise sind mit entsprechenden Bezugszeichen versehen und nicht wiederholt beschrieben.

FIG.5A-5D zeigen ein weiteres bevorzugtes Ausführungsbeispiel eines Trennstegs 50. Die oberen und unteren Teile 51A bzw. 51C können dabei wie oben erläutert ausgeführt sein. Es werden nur die wesentlichen Unterschiede beschrieben, die in der Gestaltung des mittleren Teils 51B des Trennstes 50 liegen.

Wie FIG.5C-5D zeigen den Trennsteg 50 im unbelasteten Zustand, mit einer herstellungsbedingt vorgegebenen Krümmung bzw. leicht aufgespannten Grundform. Im Trennsteg 50 sind die Biegebereiche 53 jeweils als biegsame Teilabschnitte einer durchgehenden Strebe 530 an der Schmalseite des Trennstegs 50 vorgesehen, welche den Einführöffnungen 54 gegenüberliegt. Gute elastische Biegsamkeit der Biegebereiche 53 wird durch eine jeweils zugeordnete sich zur Strebe 530 hin stetig geweitete Materialaussparung 55, z.B. ähnlich einer Kelch- oder Trompetenform (FIG.5D), gebildet die hier durch den gesamten Rumpf des Trennstegs 55 geht. Die Haltefeder 59 zum verrasten mit dem Querboden 18 (in FIG. 5 nicht gezeigt, ist hier jeweils oben an der Aussparungen 22 und einseitig angeformt mit einem freitragenden Ende hin zur Einführöffnung 54.

Wie FIG.5A-5B am besten zeigen hat der Trennsteg 50 eine vorteilhafte Formgebung der gegenüberliegenden oberen und unteren Begrenzungsflächen 54A, 54B, welche die Einführöffnung 54 nach oben und unten begrenzen. Im Anschluss an Einführschrägen, ähnlich zu FIG.4, sind zur Aussparung 22 hin in der oberen Begrenzungsfläche 54A je zwei Vertiefungen 541, 543 vorgesehen. Die Vertiefungen 541, 543 greifen in passend geformte, komplementäre Vorsprünge 542, 544 der unteren Begrenzungsfläche 54B, insbesondere im geschlossenen Zustand. Wie aus den beiden Seitenansichten in FIG.5A-5B ersichtlich bildet hierbei jede Begrenzungsflächen 54A, 54B vorzugsweise jeweils zwei versetzt angeordnete Eingriffsbereiche, da Vertiefungen 541, 543 bzw. die Vorsprünge 542, 544 in Einführrichtung versetzt sind und sich jeweils in der Tiefe nur etwa über maximal die Hälfte der Wandstärke des Trennstegs 50 in diesem Bereich erstrecken. Hierdurch wird eine bessere Schließwirkung der Einführöffnungen 54 erzielt und zudem die Torsionssteifigkeit des Trennstegs 50 insgesamt um die Längsachse A verbessert, ggf. auch bereits durch seitliche Überlappung im unbelasteten Zustand.

### Bezugszeichenliste

FIG.1
   - 10: Energieführungskette
   - 11: Seitenlasche
   - 12: Quersteg
   - 14: Aufnahmeraum
   - 15: Rastausnehmung
   - 16: Schlauch
   - 17: Kabel
   - 18: Querboden bzw. Fachboden
   - 19: Kompartiment
   - 20: Trennsteg
   - H: Höhe
   - B: Breite
FIG.2A-2D
   - 20: Trennsteg
   - 22: Aussparung
   - 23: Biegebereich
   - 24: Einführöffnung
   - 25: Kerbe
   - 26: Rasthaken
   - 37: Haltekopf
   - 38: Haltefuß
   - 39: Haltefeder
   - A: Längsachse
   - C1: Spaltmaß (zu)
   - C2: Spaltmaß (auf)
   - W: lichte Weite
FIG.3A-3B
   - 30: Trennsteg
   - 22: Aussparung
   - 23: Biegebereich
   - 34: Einführöffnung
   - 25: Kerbe
   - 37: Haltekopf
   - 38: Haltefuß
   - 39: Haltefeder
FIG.4A-4B
   - 40: Trennsteg
   - 22: Aussparung
   - 41: Rastnase
   - 43: Biegebereich
   - 44: Einführöffnung
   - 44A, 44B: Einführschräge
   - 45: Ausnehmung
   - 46: freies Ende
   - 37: Haltekopf
   - 38: Haltefuß
   - 39: Haltefeder
   - C1: Spaltmaß (zu)
   - W: lichte Weite
FIG.5A-5D
   - 22: Aussparung
   - 50: Trennsteg
   - 53: Biegebereich
   - 530: Strebe
   - 54: Einführöffnung
   - 55: Aussparung
   - 54A, 54B: Begrenzungsflächen
   - 541, 543: Vertiefung
   - 542, 544: Vorsprung
   - 59: Haltefeder

## Patentansprüche

1. Trennsteg (20; 30; 40; 50) für eine Energieführungskette (10) aus schwenkbar verbundenen Kettengliedern, welche zwei Seitenlaschen (11) aufweisen die zumindest bei einigen Kettengliedern durch zwei Querstege (12) miteinander verbunden sind und einen Führungskanal (14) für Leitungen definieren, wobei der Trennsteg (20; 30; 40; 50) in seinem mittleren Teil (21B; 31B; 51B) mehrere längliche als Durchgangsloch gestaltete Aussparungen (22) zum Aufnehmen jeweils eines plattenartigen Querbodens (18) aufweist und jede Aussparung über eine eigene Einführöffnung (24; 34; 44; 54) zu einer Schmalseite des Trennstegs mündet, sodass ein Querboden durch die Einführöffnung (24; 34; 44; 54) in die Aussparung einführbar ist **dadurch gekennzeichnet,**
**dass** der Trennsteg (20; 30; 40; 50) zu jeder Aussparung (22) zugehörig einen jeweiligen Biegebereich (23; 43; 53) aufweist mittels dessen Biegung das Spaltmaß der Einführöffnung (24; 34; 44: 54) der zugehörigen Aussparung (22) veränderbar ist und
**dass** das Spaltmaß (C1) der Einführöffnung (24; 34; 44; 54), zumindest in einer Schließstellung die dem eingebauten Zustand des Trennstegs entspricht, im Vergleich zur lichten Weite (W) der Aussparung (22) reduziert ist, nämlich weniger als 50% der lichten Weite (W) der Aussparung (22) beträgt.

2. Trennsteg nach Anspruch 1, **dadurch gekennzeichnet, dass** der Trennsteg (20; 50) in losem Zustand mit aufgeweiteten Einführöffnungen (24; 54) ausgeführt ist, wobei jede Einführöffnung (24; 54) ein gegenüber dem eingebauten Zustand größeres Spaltmaß (C2) zum Einführen eines Querbodens (18) aufweist, und dass das Spaltmaß jeder Einführöffnung (24; 54) durch Einspannen des Trennstegs (20; 50) zwischen zwei Querstege, insbesondere gegen eine Vorkrümmung des Trennstegs, reduzierbar ist.

3. Trennsteg nach Anspruch 1 oder 2 **dadurch gekennzeichnet, dass** der Trennsteg (20; 30; 50) zu jeder Aussparung einen der Einführöffnung im Wesentlichen gegenüberliegenden Biegebereich (23) aufweist.

4. Trennsteg nach Anspruch 3, **dadurch gekennzeichnet, dass** jeder Biegebereich (23; 53) durch eine Verjüngung (25; 55) an der anderen Schmalseite des Trennstegs gebildet ist.

5. Trennsteg nach einem der Ansprüche 1 bis 4, **dadurch gekennzeichnet, dass** jede Einführöffnung (54) zwei gegenüberliegende Begrenzungsflächen (54A, 54B) aufweist, die eine ineinandergreifende Formgebung aufweisen.

6. Trennsteg nach Anspruch 5, **dadurch gekennzeichnet, dass** jede Begrenzungsfläche (54A, 54B) mindestens eine Vertiefung (541, 543) und/oder einen Vorsprung (542, 544) aufweist, vorzugsweise jeweils zwei versetzt angeordnete Eingriffsbereiche, wobei jeder Eingriffsbereich jeweils mindestens eine Vertiefung und/oder einen Vorsprung umfasst.

7. Trennsteg nach einem der Ansprüche 1 bis 6, **dadurch gekennzeichnet, dass** die Biegebereiche (53) als biegsame Teilabschnitte einer durchgehenden Strebe (530) an der anderen Schmalseite des Trennstegs (50) angeordnet sind und durch eine sich zur Strebe hin aufweitende Materialaussparung (55) gebildet sind.

8. Trennsteg nach Anspruch 1 **dadurch gekennzeichnet, dass** der Trennsteg (40) an der Einführöffnung (44) jeder Aussparung (22) eine biegsame Rastnase (41) aufweist, welche beim Einführen eines Querbodens (18) die Einführöffnung (44) freigibt und den eingeführten Querboden (18) hält.

9. Trennsteg nach Anspruch 8 **dadurch gekennzeichnet, dass** jede Rastnase (41) über den zugehörigen Biegebereich (43) biegsam und einteilig mit dem Trennsteg (40) ausgeführt ist und vorzugsweise eine zu der einen Schmalseite aufweitende Einführschräge (44A) aufweist.

10. Trennsteg nach einem der Ansprüche 1 bis 9, **dadurch gekennzeichnet, dass** die Einführöffnung (24; 54) im Vergleich zur Hauptachse der länglichen Aussparung (22) höhenversetzt angeordnet ist zum Einrasten des Querbodens in Längsrichtung des Trennstegs.

11. Trennsteg nach einem der Ansprüche 1 bis 10, insbesondere nach Anspruch 9, **dadurch gekennzeichnet, dass** die Aussparung (22) einem im Wesentlichen ovalen Querschnitt der Querböden (18) korrespondierend konkav geformt ist.

12. Trennsteg nach einem der Ansprüche 1 bis 11, **dadurch gekennzeichnet, dass** das Spaltmaß (C1) der Einführöffnung in Schließstellung weniger als 33% der lichten Weite (W) der Aussparung (22) beträgt, insbesondere minimiert ist.

13. Trennsteg nach einem der vorstehenden Ansprüche **dadurch gekennzeichnet, dass** der mittlere Teil (21B; 31B; 51B) plattenartig ausgeführt ist und der Trennsteg (20; 30; 40; 50) einen oberen und unteren Teil aufweist, wobei am unteren Teil (21C; 31C; 51C) ein Haltefuß zur form- und/oder kraftschlüssigen Befestigung mit einem Quersteg (12) vorgesehen ist.

14. Trennsteg nach einem der vorstehenden Ansprüche **dadurch gekennzeichnet, dass** jede Aussparung (22) eine Haltefeder (39; 59) mit einem Rastnocken aufweist, der in eine entsprechende Öffnung des Querbodens (18) zur Sicherung in Querrichtung einrasten kann.

15. Trennsteg nach einem der vorstehenden Ansprüche **dadurch gekennzeichnet, dass** der Trennsteg (20; 30; 40; 50) in seinem mittleren Teil (21B; 31B) mindestens drei Aussparungen (22) aufweist und alle Einführöffnungen (24; 34; 44; 54) zu derselben Schmalseite des Trennstegs münden.

16. Kettenglied für eine Energieführungskette (10) umfassend zwei (11) Seitenlaschen die durch zwei Querstege (12) miteinander verbunden sind und einen Führungskanal (14) für Leitungen (16; 17) definieren, wobei mindestens ein Quersteg (12) als Öffnungssteg ausgeführt ist, **gekennzeichnet durch** mindestens zwei senkrecht zwischen beiden Querstegen (12) eingespannte Trennstege (20; 30; 40; 50) nach einem der Ansprüche 1 bis 15 sowie mindestens einen von den Trennstegen gehaltenen horizontalen Querboden (18) zur Innenaufteilung des Führungskanals.

17. Energieführungskette (10) umfassend eine Vielzahl von Kettengliedern nach Anspruch 16.

18. Verwendung von Trennstegen (20; 30; 40; 50) nach einem der Ansprüche 1 bis 15 zum Aus- oder Nachrüsten einer Energieführungskette mit einer Innenaufteilung.

## Claims

1. A divider bar (20; 30; 40; 50) for an energy guide chain (10) comprising pivotably connected chain links having two side plates (11), which at least in regard to some chain links are connected together by two transverse bars (12), and define a guide passage (14) for lines, wherein in its central part (21B; 31B; 51B) the divider bar (20; 30; 40; 50) has a plurality of elongate openings (22) each in the form of a through hole for receiving a respective plate-like transverse plate member (18) and each of the openings opens by way of its own insertion aperture (24; 34; 44; 54) to a narrow side of the divider bar so that a transverse plate can be inserted into the opening (22) through the insertion aperture (24; 34; 44; 54)
**characterised in that**
the divider bar (20; 30; 40; 50) has in association with each opening (22) a respective bending region (23; 43; 53), by means of the bending of which the gap size of the insertion aperture (24; 34; 44; 54) of the associated opening (22) can be altered, and
the gap size (C1) of the insertion aperture (24; 34; 44; 54), at least in a closed position which corresponds to the installed state of the divider bar, is reduced in comparison with the internal width (W) of the opening (22), namely is less than 50% of the internal width (W) of the opening (22).

2. A divider bar according to claim 1 **characterised in that** in the loose state the divider bar (20; 50) has expanded insertion apertures (24; 54), wherein each insertion aperture (24; 54) has a gap size (C2) which is greater than in the installed state, for the insertion of a transverse plate (18), and that the gap size of each insertion aperture (24; 54) can be reduced by clamping of the divider bar (20; 50) between two transverse bars, in particular against a pre-curvature of the divider bar.

3. A divider bar according to claim 1 or claim 2 **characterised in that** in relation to each opening the divider bar (20; 30; 50) has a bending region (23) in substantially opposite relationship to the insertion aperture.

4. A divider bar according to claim 3 **characterised in that** each bending region (23; 53) is formed by a narrowing (25; 55) at the other narrow side of the divider bar.

5. A divider bar according to one of claims 1 to 4 **characterised in that** each insertion aperture (54) has two mutually opposite boundary surfaces (54A, 54B) which are of an interengaging configuration.

6. A divider bar according to claim 5 **characterised in that** each boundary surface (54A, 54B) has at least one recess (541, 543) and/or projection (542, 544), preferably two respective engagement regions which are arranged in displaced relationship, wherein each engagement region respectively includes at least one recess and/or projection.

7. A divider bar according to one of claims 1 to 6 **characterised in that** the bending regions (53) are arranged as bendable portions of a continuous brace (530) at the other narrow side of the divider bar (50) and are formed by a material recess (55) which widens towards the brace.

8. A divider bar according to claim 1 **characterised in that** at the insertion aperture (44) of each opening (22) the divider bar (40) has a bendable latching nose (41) which upon insertion of a transverse plate (18) opens the insertion aperture (44) and holds the inserted transverse plate (18).

9. A divider bar according to claim 8 **characterised in that** each latching nose (41) is bendable by way of the associated bending region (43) and is in one piece with the divider bar (40) and preferably has an inclined insertion portion (44A) which widens towards the other narrow side.

10. A divider bar according to one of claims 1 to 9 **characterised in that** the insertion aperture (24; 54) is arranged in height-displaced relationship in comparison with the main axis of the elongate opening (22) for latching engagement of the transverse plate in the longitudinal direction of the divider bar.

11. A divider bar according to one of claims 1 to 10, in particular according to claim 9, **characterised in that** the opening (22) is of a concave shape corresponding to a substantially oval cross-section of the transverse plates (18).

12. A divider bar according to one of claims 1 to 11 **characterised in that** the gap size (C1) of the insertion aperture in the closed position is less than 33% of the internal width (W) of the opening (22), and in particular is minimized.

13. A divider bar according to one of the preceding claims **characterised in that** the central part (21B; 31B; 51B) is of a plate-like configuration and the divider bar (20; 30; 40; 50) has an upper and a lower part, wherein provided on the lower part (21C; 31C; 51C) is a holding foot for fixing to a transverse bar (12) in positively locking and/or force-locking relationship.

14. A divider bar according to one of the preceding claims **characterised in that** each opening (22) has a holding spring (39; 59) having a latching projection which can latch into a corresponding indentation in the transverse plate (18) for securing in the transverse direction.

15. A divider bar according to one of the preceding claims **characterised in that** the divider bar (20; 30; 40; 50) has at least three openings (22) in its central part (21B; 31B) and all insertion apertures (24; 34; 44; 54) open to the same narrow side of the divider bar.

16. A chain link for an energy guide chain (10) including two side plates (11) which are connected together by two transverse bars (12) and define a guide passage (14) for lines (16; 17), wherein at least one transverse bar (12) is in the form of an opening bar, **characterised by** at least two divider bars (20; 30; 40; 50) according to one of claims 1 to 15 which are clamped perpendicularly between both transverse bars (12) and at least one horizontal transverse plate (18) which is held by the divider bars for internal division of the guide passage.

17. An energy guide chain (10) including a plurality of chain links according to claim 16.

18. Use of divider bars (20; 30; 40; 50) according to one of claims 1 to 15 for original fitment or retro-fitment of an energy guide chain with an internal division.

## Revendications

1. Barre de séparation (20; 30; 40; 50) pour une chaîne de guidage d'énergie (10) comprenant des maillons de chaîne reliés de manière pivotante et ayant deux plaques latérales (11) qui, au moins en ce qui concerne certains maillons de chaîne, sont reliées ensemble par deux barres transversales (12), et définissent un passage de guidage (14) pour des lignes, dans laquelle la barre de séparation (20; 30; 40; 50) présente dans sa partie centrale (21B; 31B; 51B) une pluralité d'évidements allongées (22), chacun sous la forme d'un trou traversant, pour recevoir une tablette transversale respective en forme de plaque (18) et chacun des évidements s'ouvrant au moyen d'une ouverture d'insertion (24; 34; 44; 54) propre vers un côté étroit de la barre de séparation de sorte qu'une tablette transversale peut être insérée dans l'évidement (22) à travers l'ouverture d'insertion (24; 34; 44; 54) **caractérisé en ce que** la barre de séparation (20; 30; 40; 50) présente une zone de flexion respective (23; 43; 53) appartenant à chaque évidement (22) et au moyen de la flexion de laquelle la taille d'interstice de l'ouverture d'insertion (24; 34; 44; 54) de l'évidement associé (22) peut être modifiée, et
**en ce que** la taille d'interstice (C1) de l'ouverture d'insertion (24; 34; 44; 54) étant, au moins dans une position fermée qui correspond à l'état installé de la barre de séparation, réduite par rapport à l'écartement intérieur (W) de l'évidement (22), mesurant à savoir moins de 50 % de l'écartement intérieur (W) de l'évidement (22).

2. Barre de séparation selon la revendication 1, **caractérisée en ce qu'**à l'état libre, la barre de séparation (20; 50) présente des ouvertures d'insertion écartées (24; 54), chaque ouverture d'insertion (24; 54) présentant une taille d'interstice (C2) supérieure à celle de l'état installé, pour l'insertion d'une tablette transversale (18), et **en ce que** la taille d'interstice de chaque ouverture d'insertion (24; 54) peut être réduite par le serrage de la barre de séparation (20; 50) entre deux barres transversales, en particulier contre une précourbure de la barre de séparation.

3. Barre de séparation selon la revendication 1 ou la revendication 2, **caractérisée en ce que**, pour chaque évidement la barre de séparation (20; 30; 50) présente une zone de flexion (23) sensiblement opposée à l'ouverture d'insertion.

4. Barre de séparation selon la revendication 3, **caractérisée en ce que** chaque zone de flexion (23; 53) est formée par un rétrécissement (25; 55) sur l'autre côté étroit de la barre de séparation.

5. Barre de séparation selon l'une des revendications 1 à 4, **caractérisée en ce que** chaque ouverture d'insertion (54) présente deux surfaces de délimitation mutuellement opposées (54A, 54B) qui sont dotées d'une forme permettant de s'engrener entre elles.

6. Barre de séparation selon la revendication 5, **caractérisée en ce que** chaque surface de délimitation (54A, 54B) présente au moins un creux (541, 543) et/ou une saillie (542, 544), et présente de préférence deux régions d'engagement respectives qui sont disposées en relation décalée, chaque région d'engagement comprenant respectivement au moins un creux et/ou une saillie.

7. Barre de séparation selon l'une des revendications 1 à 6, **caractérisée en ce que** les zones de flexion (53) sont disposées comme des parties flexibles d'une entretoise continue (530) sur l'autre côté étroit de la barre de séparation (50) et sont formées par un évidement de matériau (55) qui s'élargit vers l'entretoise.

8. Barre de séparation selon la revendication 1, **caractérisée en ce que**, au niveau de l'ouverture d'insertion (44) de chaque évidement (22), la barre de séparation (40) comporte un nez de verrouillage pliable (41) qui, lors de l'insertion d'une tablette transversale (18), ouvre l'ouverture d'insertion (44) et maintient la tablette transversale insérée (18).

9. Barre de séparation selon la revendication 8, **caractérisée en ce que** chaque nez de verrouillage (41) est pliable au moyen de la zone de pliage associée (43) et est d'une seule pièce avec la barre de séparation (40) et a de préférence une partie d'insertion inclinée (44A) qui s'élargit vers l'autre côté étroit.

10. Barre de séparation selon l'une des revendications 1 à 9, **caractérisée en ce que** l'ouverture d'insertion (24; 54) est disposée de manière décalée en hauteur par rapport à l'axe principal de l'évidement allongé (22) pour l'engagement par encliquetage de la tablette transversale dans la direction longitudinale de la barre de séparation.

11. Barre de séparation selon l'une des revendications 1 à 10, notamment selon la revendication 9, **caractérisée en ce que** l'évidement (22) présente une forme concave correspondant à une section transversale sensiblement ovale des tablettes transversales (18).

12. Barre de séparation selon l'une des revendications 1 à 11 **caractérisée en ce que** la taille d'interstice (C1) de l'ouverture d'insertion en position fermée est inférieure à 33% de l'écartement intérieur (W) de l'évidement (22), et est plus particulièrement minimisée.

13. Barre de séparation selon l'une des revendications précédentes, **caractérisée en ce que** la partie centrale (21B; 31B; 51B) est réalisée en forme de plaque et la barre de séparation (20; 30; 40; 50) présente une partie supérieure et une partie inférieure, un pied de maintien étant prévu sur la partie inférieure (21C; 31C; 51C) pour la fixation à une barre transversale (12) par complémentarité de forme et/ou par adhérence.

14. Barre de séparation selon l'une des revendications précédentes, **caractérisée en ce que** chaque évidement (22) présente un ressort de maintien (39; 59) ayant une saillie d'encliquetage qui peut s'encliqueter dans une indentation correspondante de la tablette transversale (18) pour une fixation dans la direction transversale.

15. Barre de séparation selon l'une des revendications précédentes, **caractérisée en ce que** la barre de séparation (20; 30; 40; 50) présente au moins trois évidements (22) dans sa partie centrale (21B; 31B) et **en ce que** toutes les ouvertures d'insertion (24; 34; 44; 54) s'ouvrent sur le même côté étroit de la barre de séparation.

16. Maillon de chaîne pour une chaîne de guidage d'énergie (10), comprenant deux plaques latérales (11) qui sont reliées l'une à l'autre par deux barres transversales (12) et qui définissent un passage de guidage (14) pour des lignes (16; 17), au moins une barre transversale (12) étant réalisée sous la forme d'une barre ouvrable, **caractérisé par** au moins deux barres de séparation (20; 30; 40; 50) selon l'une des revendications 1 à 15, qui sont serrées perpendiculairement entre les deux barres transversales (12), et au moins une tablette transversale horizontale (18) qui est maintenue par les barres de séparation à des fins de division interne du passage de guidage.

17. Chaîne de guidage d'énergie (10) comprenant une pluralité de maillons de chaîne selon la revendication 16.

18. Utilisation de barres de séparation (20; 30; 40; 50) selon l'une des revendications 1 à 15 pour l'équipement d'origine ou ultérieur d'une chaîne de guidage d'énergie avec une division interne.
